# EUROPEAN PATENT APPLICATION

(11) **EP 4 102 909 A1**
(43) Date of publication of application: **14.12.2022**
(21) Application number: 20917952.2
(22) Date of filing: 06.02.2020
(51) Int. Cl.: H04W 72/04, H04W 72/12, H04W 28/04

(54) **TERMINAL AND COMMUNICATION METHOD**

(71) Applicant: NTT DOCOMO, INC., Chiyoda-Ku Tokyo 100-6150 (JP)
(72) Inventor: KUMAGAI, Shinya, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2020/004687
(87) International publication number: WO 2021/157040

(57) **Abstract**

Terminal (20) includes: reception section (201) that receives downlink control information; and control section (203) that determines, in a case where the downlink control information indicates an ACK for uplink data transmission, not to terminate repetition transmission of the uplink data transmission during a specific period of time after an ending timing of the downlink control information.

## Description

### Technical Field

The present disclosure relates to a terminal and a communication method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

### Citation List

### Non-Patent Literature

NPL 1
3GPP TS 38.214, "Physical layer procedures for data (Release 16)", December 2019.

### Summary of Invention

### Technical Problem

In a wireless communication system such as NR, for example, application of repetition in which a terminal repeatedly transmits an uplink transmission signal (such as data signal) has been studied.

There is room for consideration regarding a relation between ACK/NACK which is information in response to uplink transmission and the repetition (in other words, repetition control for the information in response to uplink transmission).

An object of the present disclosure is to implement appropriate repetition control for information in response to uplink transmission.

### Solution to Problem

A terminal according to one aspect of the present disclosure includes: a reception section that receives downlink control information; and a control section that determines, in a case where the downlink control information indicates an ACK for uplink data transmission, not to terminate repetition transmission of the uplink data transmission during a specific period of time after an ending timing of the downlink control information.

### Advantageous Effects of Invention

The present disclosure makes it possible to implement appropriate repetition control for ACK/NACK which is the information in response to uplink transmission.

### Brief Description of Drawings

FIG. 1 illustrates one example of a minimum interval D in a case of repetitions of a Configured Grant Physical Uplink Shared Channel;
FIG. 2 illustrates one example of the minimum interval D in a case of repetitions of a Dynamic Grant Physical Uplink Shared Channel;
FIG. 3 illustrates one example of termination of repetitions by an Uplink grant;
FIG. 4 is a block diagram illustrating one example of a configuration of a base station;
FIG. 5 is a block diagram illustrating one example of a configuration of a terminal;
FIG. 6 represents tables each of which illustrates one example of N₁ or N₂; and
FIG. 7 illustrates one example of hardware configurations of the base station and of the terminal.

### Description of Embodiments

Hereinafter, an embodiment will be described with reference to the drawings as appropriate. The same elements throughout the entire present specification are denoted by the same reference numerals unless otherwise noted. The matters described below together with the accompanying drawings are for describing an exemplary embodiment and not for indicating the sole embodiment. For example, in a case where an order of operations is indicated in the embodiment, the order of operations may be appropriately changed as long as there is no inconsistency as a whole operation.

In a case where a plurality of embodiments and/or modifications are exemplified, some configurations, functions and/or operations in a given embodiment and/or modification may be included in another embodiment and/or modification as long as there is no inconsistency, or may be replaced with corresponding configurations, functions and/or operations of another embodiment and/or modification.

Further, a detailed description more than necessary may be omitted in the embodiment. For example, a detailed description of a publicly-known or well-known technical matter may be omitted to facilitate the understanding of those skilled in the art by avoiding unnecessary redundancy of a description and/or an ambiguous technical matter or concept. Further, a duplicate description for a substantially identical configuration, function and/or operation may be omitted.

The accompanying drawings and the following description are provided to aid in the understanding of the embodiment, and are not intended to limit the subject matter described in the claims. Further, the terms used in the following description may also be appropriately replaced with other terms to help those skilled in the art understand.

### <Knowledge Leading to the Present Disclosure>

In 3GPP, the use of two grants referred to as a Dynamic Grant (DG) and a Configured Grant (CG) has been agreed.

The DG and CG are information on scheduling of signal transmission at a terminal (UE). For example, an uplink (UL) channel is scheduled by at least one of the DG and the CG. Examples of the uplink channel include Physical Uplink Shared Channel (PUSCH) used for data transmission, and Physical Uplink Control Channel (PUCCH) used for control information transmission.

A PUSCH scheduled by the DG may be referred to as a DG PUSCH, and a PUSCH scheduled by the CG may be referred to as a CG PUSCH. Further, for example, signal transmission using the CG PUSCH and signal transmission using the DG PUSCH may be referred to as CG PUSCH transmission and DG PUSCH transmission, respectively.

Further, it has been agreed that feedback information referred to as Downlink Feedback Information (DFI) is transmitted to the UE in a case where the CG is configured to the UE. Note that, for example, the UE may be configured with one configuration or a plurality of configurations by a higher layer message with respect to the CG. Further, with respect to the CG, the UE may be configured with one configuration or a plurality of configurations by a higher layer message, and one specific configuration or a plurality of specific configurations may be activated (Activation) in Downlink Control Information (DCI). For example, the DFI includes information in response to the PUSCH in a hybrid automatic repeat request (HARQ) process in UL (hereinafter, the information may be referred to as "HARQ-ACK"). The information in response to the PUSCH includes, for example, an acknowledgement (ACK) or a negative acknowledgement (NACK). Note that, the DFI may also be referred to as "CG-DFI" since the DFI is transmitted to the UE in the case where the CG is configured to the UE.

Further, it has been agreed in the 3GPP that the following are at least supported in a design of the DFI for the CG:
- The DFI includes HARQ-ACK bitmap at a transport block (TB) level for all UL HARQ processes. Here, the total number of HARQ processes is defined in Release 15. For example, the total number of HARQ processes is at most 16;
- A minimum interval D is configured by Radio Resource Control (RRC) signaling. The minimum interval D is a minimum interval from an ending symbol of a PUSCH to a starting symbol of the DFI including HARQ-ACK for the PUSCH. Note that, the UE assumes that HARQ-ACK for a PUSCH whose transmission is terminated before n - D is a valid ACK. In this case, n is time corresponding to the starting symbol of the DFI; and
- Complexity of blind decoding in the UE does not increase due to the size of the DFI.

Here, HARQ-ACK at the transport block (TB) level for all UL HARQ processes includes, for example, HARQ-ACK for the DG PUSCH and HARQ-ACK for the CG PUSCH. In other words, it has been agreed that the DFI includes the HARQ-ACK for the DG PUSCH and the HARQ-ACK for the CG PUSCH.

Further, a time interval between the PUSCH and the DFI carrying the HARQ-ACK for the PUSCH, and conditions for the UE to assume a valid ACK have been agreed.

Further, the following points have been agreed on the CG PUSCH:
- In a case where the UE is configured with a parameter repK defining the number of repetitions > 1, a TB to be repeatedly transmitted is mapped within one configuration in a case where the UE is configured with a plurality of active configurations;
- In the above case, the UE repeats the TB in the earliest consecutive transmission occasion candidates within the same configuration instead of consecutive slots;
- The UE may drop repetition transmission that falls into a subsequent configured period; and
- The UE terminates the repetitions in a case where explicit feedback indicating an ACK is received for an HARQ process in the DFI.

In the above contents, it has been agreed that CG PUSCH repetitions are performed depending on the repK, and that the CG PUSCH repetitions are terminated based on information included in the DFI.

Further, for example, the following points have been agreed on the minimum interval D in cases of slot aggregation and CG repetition:
- For the case of CG PUSCH repetitions, the minimum interval D means an interval from the ending symbol of each PUSCH to be repeatedly transmitted K times to the starting symbol of the DFI including HARQ-ACK for the associated HARQ process ID;
- For the case of slot aggregation for scheduled UL transmission, the minimum interval D refers to an interval from the ending symbol of the PUSCH in the first slot of a plurality of slots which perform repetition transmission to the starting symbol of the DFI including HARQ-ACK for the associated HARQ process ID;
- For the case where the HARQ-ACK value is an ACK, the minimum interval D is an interval from the ending symbol of the first PUSCH of the repetition transmission of the TB to the starting symbol of the DFI; and
- For the case where the HARQ-ACK value is a negative acknowledgement (NACK), the minimum interval D is an interval from the ending symbol of the last available PUSCH of the TB repetition transmission to the starting symbol of the DFI.

In other words, it has been agreed that the DG PUSCH with slot aggregation may be transmitted in the case where the CG is configured to the UE. Here, the DG PUSCH with slot aggregation may be used for the repetition.

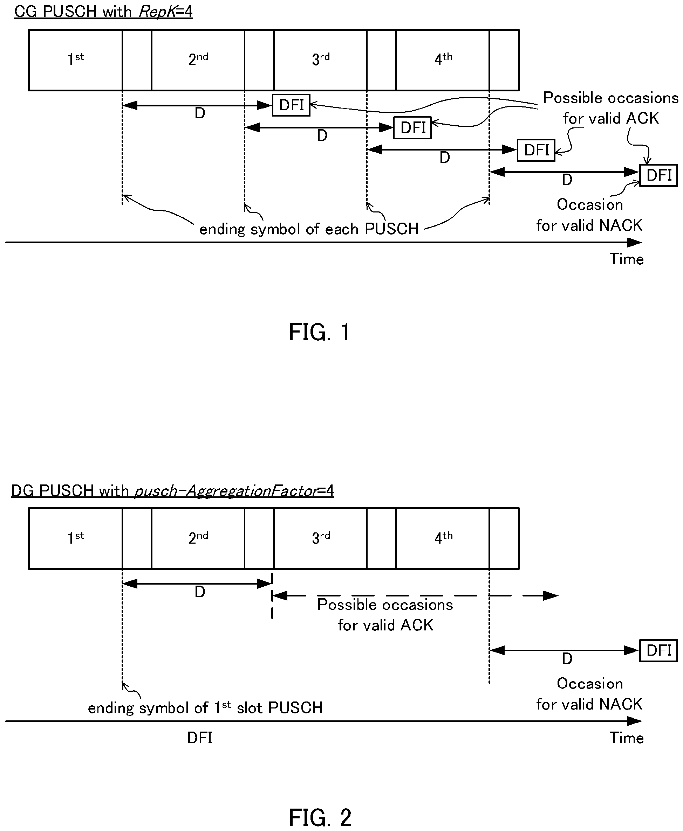

The minimum interval D will be described with reference to FIGS. 1 and 2. FIG. 1 illustrates one example of a minimum interval D in the case of CG PUSCH repetitions. FIG. 2 illustrates one example of the minimum interval D in a case of DG PUSCH repetitions. The horizontal axis of FIGS. 1 and 2 indicates a time axis.

FIG. 1 exemplifies positions of the CG PUSCH on the time axis in four (repK=4) repetition transmission occasions (which may also be referred to as repetition occasion(s) hereinafter) and positions of the DFI corresponding thereto.

As illustrated in FIG. 1, the minimum interval D is defined as an interval from the ending symbol of each PUSCH to be repeatedly transmitted to the starting symbol of the DFI.

FIG. 2 indicates positions of the DG PUSCH on the time axis in four transmission occasions and positions of the DFI corresponding thereto.

As illustrated in FIG. 2, the minimum interval D for the ACK is defined as an interval from the ending symbol of the first DG PUSCH of the repetition transmission of the TB to the starting symbol of the DFI. Further, the minimum interval D for the NACK is defined as an interval from the ending symbol of the last DG PUSCH to the starting symbol of the DFI.

Note that, the numbers of transmission occasions in FIGS. 1 and 2 are exemplary, and the present disclosure is not limited thereto. The number of repetition occasions may be three or less, or may be five or more.

Section 6.1.2.3.1 of 3GPP Technical Specification (TS) 38.214 specifies the termination of the repetitions for an arbitrary redundancy version (RV) with respect to the CG.
- For example, the repetitions are terminated after transmitting K repetitions, or at the last transmission occasion among the K repetitions within the period P, or from the starting symbol of the repetitions that overlaps with a PUSCH with the same HARQ process scheduled by DCI format 0_0 or 0_1. The repetitions may be terminated at the earliest timing among these three timings.

In other words, the CG PUSCH repetitions are terminated in a case where a PUSCH with the same HARQ process is scheduled by DCI (corresponding to an UL grant (in other words, DG)).

Further, Section 6.1 of TS 38.214 describes the following point regarding the relation between the CG PUSCH repetitions and the UL grant:
- A UE is not expected to be scheduled by a Physical Downlink Control Channel (PDCCH) ending in symbol i to transmit a PUSCH on a given serving cell for a given HARQ process in a case where the following two conditions are satisfied: the first condition is that there is a transmission occasion where the UE transmits a CG PUSCH according to TS 38.321 with the same HARQ process on the same serving cell starting in symbol j after symbol i; and the second condition is that the gap between the end of PDCCH and the beginning of symbol j is less than N₂ symbols.

Since the PDCCH includes an UL grant, the above-described contents define, in other words, an example of conditions for terminating the CG PUSCH repetitions, and of a timeline relating to the termination of the repetitions by an UL grant.

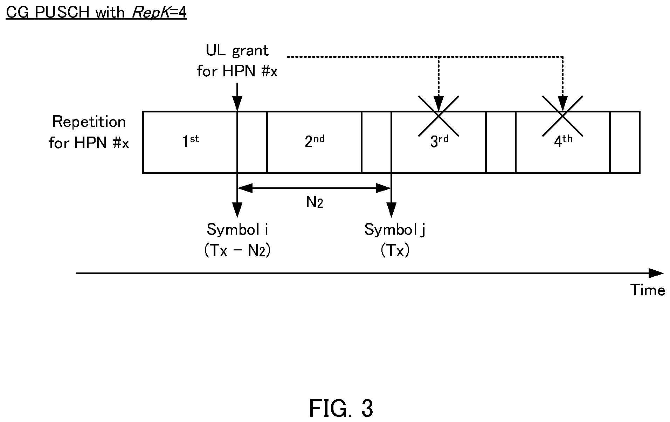

FIG. 3 illustrates one example of termination of repetitions by an UL grant. The horizontal axis in FIG. 3 indicates a time axis. FIG. 3 indicates positions of the CG PUSCH on the time axis in four (repK=4) repetitions corresponding to HARQ process numbers (HPNs) #x, and UL grant transmission timings for the same HPNs #x.

For example, in a case where a base station (gNodeB (gNB)) wants to cancel UL transmission by the UE in the third and the fourth repetition occasions of the four repetition occasions, the base station (gNodeB(gNB)) transmits the UL grant at least N₂ symbols earlier than symbol j (Tx) which is the starting timing of the third repetition occasion as illustrated in FIG. 3.

According to the agreements and the definitions in the TS as described above, there is a case where the DG PUSCH with slot aggregation may be transmitted in the case where the CG is configured to the UE. The DFI to be transmitted to the terminal in the case where the CG is configured to the UE includes the HARQ-ACK for the CG PUSCH and the HARQ-ACK for the DG PUSCH.

Further, according to the agreements and the definitions in the TS as described above, the CG PUSCH repetitions are terminated based on the HARQ-ACK for the CG PUSCH, which the DFI includes, or based on an UL grant. Further, with respect to the termination of the CG PUSCH repetitions based on an UL grant, there is a timeline which indicates the timing of the termination of the repetitions.

However, there is room for consideration regarding the repetition control for the DFI which is an example of the information in response to uplink transmission.

For example, there is room for consideration regarding the control relating to the repetitions of the DG PUSCH with slot aggregation, e.g. the control based on the HARQ-ACK for the DG PUSCH, which the DFI includes.

Further, there is also room for consideration regarding the repetition control for the DFI, e.g. the control of the timeline in a time direction, in a case where there are the CG PUSCH repetitions and the DG PUSCH repetitions.

In one aspect of the present disclosure, appropriate repetition control for the DFI which is an example of the information in response to uplink transmission will be described.

### <Configuration of Base Station>

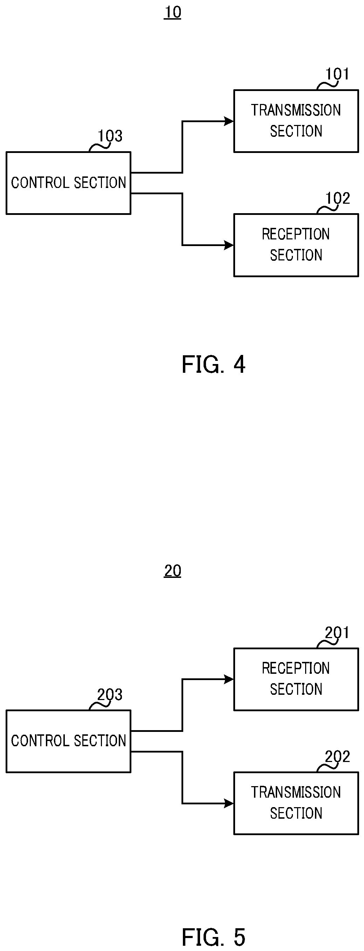

FIG. 4 is a block diagram illustrating one example of a configuration of base station 10. Base station 10 includes, for example, transmission section 101, reception section 102, and control section 103. Base station 10 communicates wirelessly with terminal 20 (see FIG. 5).

Transmission section 101 transmits a downlink (DL) signal to terminal 20. For example, transmission section 101 transmits the DL signal under the control of control section 103. The DL signal may include, for example, information indicating scheduling relating to signal transmission of terminal 20 (for example, an UL grant), and may include control information (for example, Downlink Control Information (DCI)). Further, the control information may include the DFI. The DFI may include information on an acknowledgement response to a signal to be transmitted from terminal 20.

Reception section 102 receives an uplink (UL) signal transmitted from terminal 20. For example, reception section 102 receives the UL signal under the control of control section 103. The UL signal to be received may include, for example, information on processing capability of terminal 20 (for example, UE processing capability).

Control section 103 controls communication operations of base station 10 including transmission processing of transmission section 101 and reception processing of reception section 102.

For example, control section 103 receives data, control information and/or the like from a higher layer, and outputs the received control information and/or the like to transmission section 101. Further, control section 103 outputs data, control information and/or the like received from reception section 102 to a higher layer.

### <Terminal Configuration>

FIG. 5 is a block diagram illustrating one example of a configuration of terminal 20. Terminal 20 includes, for example, reception section 201, transmission section 202, and control section 203. Terminal 20 communicates wirelessly with, for example, base station 10.

Reception section 201 receives a DL signal transmitted from base station 10. For example, reception section 201 receives the DL signal under the control of control section 203.

Transmission section 202 transmits an UL signal to base station 10. For example, transmission section 202 transmits the UL signal under the control of control section 203. For example, transmission section 202 uses the DG PUSCH and/or the CG PUSCH to transmit the UL signal.

Control section 203 controls communication operations of terminal 20, which include reception processing in reception section 201 and transmission processing in transmission section 202. For example, control section 203 receives data, control information and/or the like from a higher layer, and outputs the received data, control information and/or the like to transmission section 202. Further, control section 203 outputs, for example, data, control information and/or the like received from reception section 201 to a higher layer.

Further, control section 203 controls the DG PUSCH repetition transmission and/or the CG PUSCH repetition transmission. For example, control section 203 controls the termination of the repetition transmission.

Next, a specific control method for the repetition transmission control will be described.

### <Control Method 1>

In control method 1, terminal 20 does not terminate the DG PUSCH repetition transmission regardless of the contents of the DFI for an HARQ process (e.g. whether an ACK or NACK is indicated). In other words, the DG PUSCH repetitions may continue, for example, until a specified number of times indicated by a parameter pusch-AggregationFactor is reached. For example, terminal 20 does not terminate the DG PUSCH repetition transmission in a case where the DFI for an HARQ process indicates an ACK. In other words, an ACK (for example, a valid ACK) indicated in the DFI for an HARQ process may not be used to terminate the repetition transmission. Alternatively, terminal 20 does not terminate the DG PUSCH repetition transmission in a case where terminal 20 does not receive the DFI for an HARQ process. Note that, the case of not receiving the DFI for an HARQ process includes a case where there is no DFI, for example, a case where the CG is not configured to terminal 20.

The DG PUSCH repetition transmission may be executed in the DG PUSCH to which slot aggregation is applied.

### <Control Method 2>

In control method 2, terminal 20 may terminate the DG PUSCH repetition transmission based on the contents of the DFI for an HARQ process. For example, terminal 20 may terminate the DG PUSCH repetition transmission in a case where the DFI for an HARQ process indicates an ACK. In other word, an ACK (for example, a valid ACK) indicated in the DFI for an HARQ process may be used to terminate the repetition transmission. In this case, the DG PUSCH repetitions may be terminated, for example, before reaching the specified number of times indicated by the parameter pusch-AggregationFactor.

In relation to the configuration example of FIG. 5, in control method 2, for example, reception section 201 of terminal 20 receives the DFI (which is an example of the feedback information) for the CG PUSCH, and control section 203 may terminate the DG PUSCH repetition transmission in a case where the DFI indicates an ACK.

In control methods 1 and 2 described above, the relationship between the contents of the DFI and the control of the DG PUSCH repetition transmission (termination of transmission) is defined so that appropriate repetition control for the DFI (an example of the information in response to uplink transmission) in accordance with the definition can be performed. For example, in control method 2 described above, the DG PUSCH repetition transmission is terminated based on the contents of the DFI so that appropriate repetition control for the DFI can be performed. Further, control method 2 makes it possible to, for example, suppress consumption of resources according to the repetition transmission.

Note that, control methods 1 and 2 described above may be used in combination, or may be used by selectively switching therebetween. For example, terminal 20 may use control method 2 in a case where the CG is configured to terminal 20, and may use control method 1 in a case where the CG is not configured to terminal 20.

In relation to the configuration example of FIG. 5, for example, control section 203 of terminal 20 may determine whether the DG PUSCH repetition transmission in the case where the DFI indicates an ACK is terminated depending on whether the CG is configured to terminal 20. In other words, the repetition control of the DG PUSCH may be changed depending on whether the CG is configured to terminal 20.

Note that, a relationship (such as a timeline) between a timing when terminal 20 receives the DFI and a timing when terminal 20 terminates the repetition transmission (timing to start the termination) may be configured.

Hereinafter, the relationship (in other words, control) between the timing of receiving the DFI and the timing of terminating the PUSCH repetition transmission will be described without distinguishing between the DG and he CG.

### <Control Method 3>

In control method 3, a timeline between the timing when terminal 20 receives the DFI and the timing when terminal 20 terminates the repetition transmission is defined by a standard. Terminal 20 controls the repetition in accordance with the defined timeline. In other words, terminal 20 has a function for repetition in accordance with the standard.

In control method 3, for example, terminal 20 is not expected to receive an ACK in a PDCCH ending in symbol i for a given HARQ process to terminate PUSCH transmission on a given serving cell starting in symbol j for the HARQ process. In this regard, a time interval (gap) between the ending symbol i of the PDCCH and the starting symbol j of the PUSCH is, for example, less than X symbols. Note that, the PDCCH may include the DFI.

In other words, terminal 20 does not terminate the PUSCH transmission in a case where the gap between the ending symbol i of the PDCCH and the starting symbol j of the PUSCH is less than X symbols even when the DFI included in the PDCCH indicates an ACK. In a case where the gap between the ending symbol i of the PDCCH and the starting symbol j of the PUSCH is more than or equal to X symbols, on the other hand, terminal 20 terminates the PUSCH transmission based on the DFI indicating an ACK.

In relation to the configuration example of FIG. 5, for example, in a case where reception section 201 of terminal 20 receives a PDCCH (an example of a channel including downlink control information) and the DFI included in the PDCCH indicates an ACK for the PUSCH, control section 203 determines not to terminate the PUSCH repetition transmission during a specific period of time (for example, X symbols) after the ending timing of the PDCCH.

For example, the value of a parameter "X" indicating the threshold number of symbols with respect to the gap may be fixed, or may be configured based on information which terminal 20 possesses and/or information received from base station 10. For example, the parameter X may be configured based on the processing capability of terminal 20 (UE processing capability). As an example, the parameter X may be a parameter N₂ (X=N₂) indicating the processing capability of terminal 20 with respect to UL transmission (for example, PUSCH transmission), or a parameter N₁ (X=N₁) indicating the processing capability of terminal 20 with respect to DL reception (for example, PDSCH reception). The parameter N₂ may be the parameter described in Subclause 6.4 of TS 38.214. Further, the parameter N₁ may be the parameter described in Subclause 5.3 of TS 38.214.

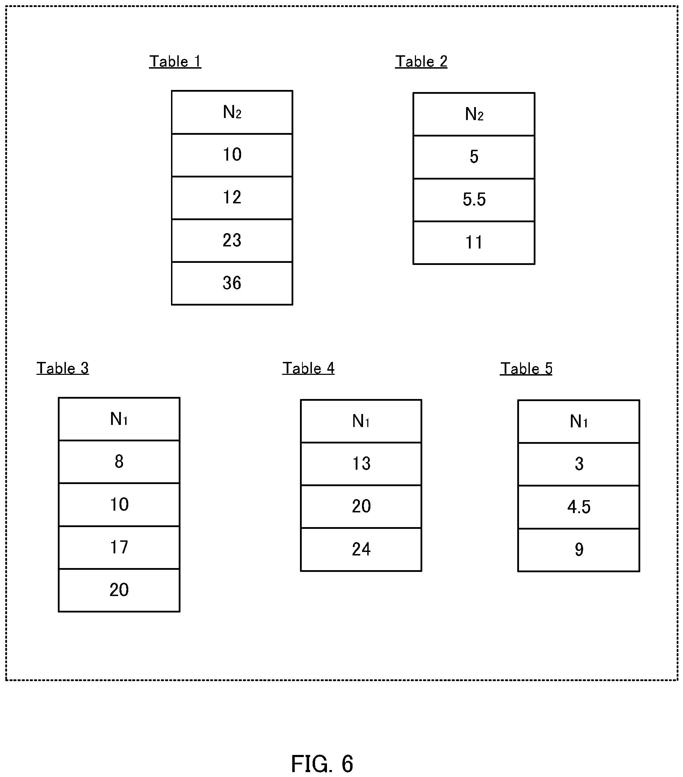

FIG. 6 represents tables each of which indicates one example of the parameter N₁ or N₂. FIG. 6 shows Tables 1 and 2 indicating examples of the parameter N₂, and Tables 3 to 5 indicating examples of the parameter N₁. For example, terminal 20 may configure N₁ or N₂ in any one of Tables 1 to 5 indicated in FIG. 6 to the above-mentioned X. Note that, selecting any of Tables 1 to 5 in FIG. 6 may be based on information that terminal 20 possesses and/or information to be received from base station 10.

### <Control Method 4>

In control method 4, with respect to terminal 20, for example, there is no definition of the timeline between the timing when terminal 20 receives the DFI and the timing when terminal 20 terminates the repetition transmission. In other words, control method 4 may depend on terminal 20 as to whether the repetition transmission is terminated, and as to from which repetition transmission the repetition transmission is terminated in a case where the repetition transmission is terminated. For example, in a case where terminal 20 receives the DFI indicating an ACK, terminal 20 may terminate the repetition transmission in the shortest time to be determined according to the processing capability of terminal 20. In other words, terminal 20 may continue the repetition transmission until the shortest time even in a case where terminal 20 receives the DFI indicating an ACK.

Control methods 3 and 4 described above make it possible to appropriately control the timing when terminal 20 terminates the repetition transmission with respect to the timing when terminal 20 receives the DFI.

### <Relationship between Control Methods 3 and 4 and DG and CG>

For control methods 3 and 4, the present disclosure has indicated the control of the timing of receiving the DFI and the timing of terminating the PUSCH repetition transmission without distinguishing between the DG and the CG. For example, control methods 3 and 4 may be applied independently to the CG PUSCH and the DG PUSCH, respectively.

For example, control method 3 may be applied to timing control for both the DG PUSCH and the CG PUSCH. In this case, the parameter X relating to the timing control of the DG PUSCH, and the parameter X relating to the timing control of the CG PUSCH may be configured independently of each other. For example, the above-mentioned N₁ may be configured to the parameter X relating to the timing control of the DG PUSCH, and the above-mentioned N₂ may be configured to the parameter X relating to the timing control of the CG PUSCH.

Alternatively, control method 4 may be applied to the timing control for both the DG PUSCH and the CG PUSCH. Alternatively, control method 3 may be applied to the timing control for the DG PUSCH, and control method 4 may be applied to the timing control for the CG PUSCH. Alternatively, control method 4 may be applied to the timing control for the DG PUSCH, and control method 3 may be applied to the timing control for the CG PUSCH.

Although the embodiment described above has been described with mention of the DG PUSCH and the CG PUSCH as examples, the present disclosure is not limited thereto. The present disclosure may also be applied to channels different from the DG PUSCH and the CG PUSCH.

In the embodiment described above, the term "terminate" may be replaced with any other term such as "end", "close", "discontinue" and "interrupt".

In the embodiment described above, "repetition(s)" may be replaced with "repetition transmission(s)", "repeatedly transmit(ted)", "transmission(s)", "repeated transmission(s)", "repetition transmission occasion(s)", or the like.

### (Hardware Configuration)

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit" or "transmitter." The methods for implementing the functions are not limited specifically as described above.

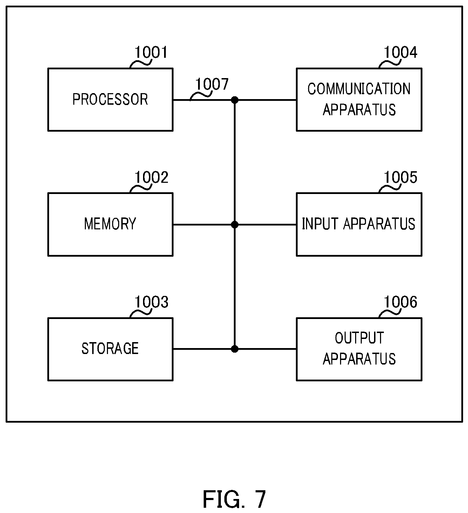

For example, the base station, the terminal, and the like according to an embodiment of the present disclosure may function as a computer that executes processing of a wireless communication method of the present disclosure. FIG. 7 illustrates one example of hardware configurations of the base station and of the terminal according to one embodiment of the present disclosure. Base station 10 and terminal 20 described above may be physically constituted as a computer apparatus including processor 1001, memory 1002, storage 1003, communication apparatus 1004, input apparatus 1005, output apparatus 1006, bus 1007, and the like.

Note that, the term "apparatus" in the following description can be replaced with a circuit, a device, a unit, or the like. The hardware configurations of base station 10 and of terminal 20 may include one apparatus or a plurality of apparatuses illustrated in FIG. 4, or may not include part of the apparatuses.

The functions of base station 10 and terminal 20 are implemented by predetermined software (program) loaded into hardware such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103 and control section 203 as described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiment is used. For example, control section 103 of base station 10 or control section 203 of terminal 20 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented by one or more chips. Note that, the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the wireless communication method according to an embodiment of the present disclosure.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be, for example, a database, a server or other appropriate media including at least one of memory 1002 and storage 1003.

Communication apparatus 1004 is hardware (transmission and reception device) for communication between computers through at least one of wired and wireless networks and is also called, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, and transmission section 202, and the like as described above may be realized by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that, input apparatus 1005 and output apparatus 1006 may be integrated (for example, a touch panel).

The apparatuses, such as processor 1001, memory 1002 and the like, are connected by bus 1007 for communication of information. Bus 1007 may be configured using a single bus or using buses different between each pair of the apparatuses.

Furthermore, base station 10 and terminal 20 may include hardware, such as a microprocessor, a digital signal processor (DSP), an ASIC (Application Specific Integrated Circuit), a PLD (Programmable Logic Device), and an FPGA (Field Programmable Gate Array), and the hardware may implement part or all of the functional blocks. For example, processor 1001 may be implemented using at least one of these pieces of hardware.

### (Notification and Signaling of Information)

The notification of information is not limited to the aspects or embodiment described in the present disclosure, and the information may be notified by another method. For example, the notification of information may be carried out by one or a combination of physical layer signaling (for example, DCI (Downlink Control Information) and UCI (Uplink Control Information)), upper layer signaling (for example, RRC (Radio Resource Control) signaling, MAC (Medium Access Control) signaling, notification information (MIB (Master Information Block) and SIB (System Information Block))), and other signals. The RRC signaling may be called an RRC message and may be, for example, an RRC connection setup message, an RRC connection reconfiguration message, or the like.

### (Application System)

The aspects and embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UMB (Ultra-WideBand), Bluetooth (registered trademark), or other appropriate systems and a next-generation system extended based on the above systems. Additionally or alternatively, a combination of two or more of the systems (e.g., a combination of at least one of LTE and LTE-A and 5G) may be applied.

### (Processing Procedure and the like)

The orders of the processing procedures, the sequences, the flow charts, and the like of the aspects and embodiment described in the present disclosure may be changed as long as there is no contradiction. For example, elements of various steps are presented in exemplary orders in the methods described in the present disclosure, and the methods are not limited to the presented specific orders.

### (Operation of Base Station)

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, MME and S-GW). Although there is one network node in addition to the base station in the case illustrated above, a plurality of other network nodes may be combined (for example, MME and S-GW).

### (Direction of Input and Output)

The information or the like (see the item of "Information and Signals") can be output from a higher layer (or a lower layer) to a lower layer (or a higher layer). The information or the like may be input and output through a plurality of network nodes.

### (Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that, the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements can be identified by any suitable names, and various names allocated to these various channels and information elements are not limitative in any respect.

### (Base Station (Wireless Base Station))

The terms "base station (BS)", "wireless base station", "fixed station", "NodeB", "eNodeB (eNB)", "gNodeB (gNB)", "access point", "transmission point", "reception point", "transmission/reception point", "cell", "sector", "cell group", "carrier", and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor (RRH: Remote Radio Head)). The term "cell" or "sector" denotes part or all of the coverage area of at least one of the base station and the base station subsystem that perform the communication service in the coverage.

### (Terminal)

The terms "Mobile Station (MS)", "user terminal", "User Equipment (UE)", and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### (Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be IoT (Internet of Things) equipment such as a sensor.

The base station in the present disclosure may also be replaced with the user terminal. For example, the aspects and embodiment of the present disclosure may find application in a configuration that results from replacing communication between the base station and the user terminal with communication between multiple user terminals (such communication may, e.g., be referred to as D2D (Device-to-Device), V2X (Vehicle-to-Everything), or the like). In this case, terminal 20 may be configured to have the functions that base station 10 described above has. The wordings "uplink" and "downlink" may be replaced with a corresponding wording for inter-terminal communication (for example, "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

### (Meaning and Interpretation of Terms)

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming", "expecting", "considering", and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed". When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

The reference signal can also be abbreviated to an RS and may also be called a pilot depending on the applied standard.

The description "based on" used in the present disclosure does not mean "based only on," unless otherwise specified. In other words, the description "based on" means both of "based only on" and "based at least on".

Any reference to elements by using the terms "first", "second" and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

The "section" in the configuration of each apparatus described above may be replaced with "means," "circuit," "device," or the like.

In a case where terms "include", "including", and their modifications are used in the present disclosure, these terms are intended to be inclusive like the term "comprising". Further, the term "or" used in the present disclosure is not intended to be an exclusive or.

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology indicates, for example, at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., OFDM (Orthogonal Frequency Division Multiplexing) symbol, SC-FDMA (Single Carrier-Frequency Division Multiple Access) symbol, or the like) in the time domain. The slot may also be a time unit based on the numerology.

The slot may include a plurality of mini-slots. Each of the mini slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini-slot, and the symbol indicate time units in transmitting signals. The radio frame, the subframe, the slot, the mini-slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot or the like instead of a subframe.

Here, the TTI, for example, refers to a minimum time unit for scheduling in wireless communication. For example, in an LTE system, the base station performs scheduling for allocating a radio resource (a frequency bandwidth, a transmit power, and the like that can be used in each user terminal) on the basis of TTI to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword or the like is actually mapped may be shorter than the TTI.

Note that, in a case where one slot or one mini-slot is referred to as the TTI, one or more TTIs (that is, one or more slots or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that, the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini-slot, one subframe, or one TTI. One TTI and one subframe may be constituted by one resource block or a plurality of resource blocks.

Note that, one or more RBs may be referred to as a Physical Resource Block (PRB: Physical RB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common RBs (common resource blocks) for certain numerology in a certain carrier. Here, the common RBs may be identified by RB indices that use a common reference point of the carrier as a reference. The PRB may be defined by a certain BWP and may be numbered within the BWP.

The BWP may include a BWP for UL (UL BWP) and a BWP for DL (DL BWP). An UE may be configured with one or more BWPs within one carrier.

At least one of the configured BWPs may be active, and the UE does not have to assume transmission/reception of a predetermined signal or channel outside the active BWP. Note that, "cell", "carrier" and the like in the present disclosure may be replaced with "BWP".

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a," "an," and "the" in English, for example, are added in the present disclosure by translation, nouns following these articles may have the same meaning as used in the plural.

In the present disclosure, the expression "A and B are different" may mean that "A and B are different from each other". Note that, the expression may also mean that "A and B are different from C". The expressions "separated" and "coupled" may also be interpreted in the same manner as the expression "A and B are different".

### (Variations and the like of Aspects)

The aspects and embodiment described in the present disclosure may be independently used, may be used in combination, or may be switched and used along the execution. Further, notification of predetermined information (for example, notification indicating "it is X") is not limited to explicit notification, and may be performed implicitly (for example, by not notifying the predetermined information).

While the present disclosure has been described in detailed, it is obvious to those skilled in the art that the present disclosure is not limited to the embodiment described in the present disclosure. Modifications and variations of the aspects of the present disclosure can be made without departing from the spirit and the scope of the present disclosure defined by the description of the appended claims. Therefore, the description in the present disclosure is intended for exemplary description and does not limit the present disclosure in any sense.

### Industrial Applicability

An aspect of the present disclosure is useful for, for example, a wireless communication system.

### Reference Signs List

10 Base station
20 Terminal
101, 202 Transmission section
102, 201 Reception section
103, 203 Control section

## Claims

1. A terminal, comprising:
a reception section that receives downlink control information; and
a control section that determines, in a case where the downlink control information indicates an ACK for uplink data transmission, not to terminate repetition transmission of the uplink data transmission during a specific period of time after an ending timing of the downlink control information.

2. The terminal according to claim 1, wherein the specific period of time is a period of time when a number of X symbols is less than a threshold value after an ending symbol of reception of the downlink control information.

3. The terminal according to claim 2, wherein the number of X symbols is based on either capability information on uplink transmission processing of the terminal or capability information on downlink reception processing of the terminal.

4. The terminal according to claim 1, wherein the uplink data transmission is either uplink data transmission with a Configured Grant (CG) or uplink data transmission with a Dynamic Grant (DG).

5. A communication method, comprising:
receiving, by a terminal, downlink control information; and
determining, by the terminal, in a case where the downlink control information indicates an ACK for uplink data transmission, not to terminate repetition transmission of the uplink data transmission during a specific period of time after an ending timing of the downlink control information.
